# EUROPEAN PATENT SPECIFICATION

(11) **EP 2 649 171 B1**
(45) Date of publication and mention of the grant of the patent: **29.10.2014**
(21) Application number: 11790632.1
(22) Date of filing: 05.12.2011
(51) Int. Cl.: C11D 1/835, C11D 3/04, C11D 1/62, C11D 1/722, C11D 1/72, C11D 1/75, C11D 1/94, C11D 3/02, C11D 11/00, B60S 1/00

(54) **COMPOSITION FOR CLEANING OF HARD SURFACES**
ZUSAMMENSETZUNG ZUR REINIGUNG VON HARTEN OBERFLÄCHEN
COMPOSITION DE NETTOYAGE DE SURFACES DURES

(30) Priority: 07.12.2010 EP 10193983; 07.12.2010 US 420400 P
(43) Date of publication of application: 16.10.2013
(73) Proprietor: Akzo Nobel Chemicals International B.V., 3811 MH Amersfoort (NL)
(72) Inventor: COMPANY, Mahnaz, S-422 47 Hisings Backa (SE); THYBERG, Anette, S-444 45 Stenungsund (SE)
(74) Representative: Akzo Nobel IP Department
(86) International application number: PCT/EP2011/071687
(87) International publication number: WO 2012/076432

(56) References cited:
- WO-A1-03/087280
- US-A- 3 959 157
- US-A1- 2009 188 533

## Description

### Technical Field of Invention

The present invention relates to certain compositions and the use of said compositions for removal of dirt from hard surfaces, especially for brushless cleaning of vehicles, such as e.g. cars and buses.

### Technical Background of_the Invention

Automatic vehicle cleaning methods have been used for many years and there have been many activities in the area of developing new machines, brushes, and chemicals. However, brushless vehicle cleaning is the preferred cleaning method by many customers who want to protect the coating on the surfaces.

It is well known that brushless vehicle cleaning will result in less damage on surfaces. The disadvantage of brushless vehicle cleaning is the grey thin traffic film remaining on the surface after cleaning. This thin film can easily be removed by touching the surface.

In brushless vehicle cleaning the chemicals used and the specific formulation applied play a very important role in reducing the amount of this traffic film that is left on the surface after cleaning. Further, the chemicals should be very effective at low concentration and have minimal environmental impact.

After many years of development in the areas of both equipment and formulations the traffic film still remains a problem.

WO 2005/113735 generally discloses an aqueous cleaning composition for hard surfaces having a pH of less than 7.0 which comprises a) a non-ionic surfactant, more specifically selected from a group consisting of alkoxylated branched or linear alcohols, amine oxides, polyhydritic alcohols, betaines, and mixtures thereof, b) an alkoxylated cationic surfactant, c) a hydroxyl-functional organic solvent, and d) a water soluble organic acid.

WO 03/087280 generally discloses vehicle drying and polishing compositions including a) an alkyl ether amine, b) an alkyl diamine, c) a propoxylated or mixed alkoxylated quaternary ammonium compound exemplified by a compound having two ethyl groups, one methyl group, and one polyoxypropylene group, and d) a stabilizer including neutralising acid and/or a non-ionic surfactant, which may be e.g. an amine oxide, an alkoxylated alcohol that may be end-capped or an alkyl glycoside, or mixtures thereof. The composition may further include an ethoxylated quaternary ammonium compound such as PEG 15 cocomonium chloride.

US 5 929 024 discloses a hard surface cleaning composition comprising at least one surfactant selected from the group comprising e.g. a) an ethoxylated non-ionic, b) an alkyl polyglucoside having a C8-C20 alkyl group, c) an amine oxide, and mixtures thereof, and further comprising e.g. d) an ethoxylated trialkyl ammonium salt which has maximally 5 EO units.

EP 1 074 606 discloses a liquid detergent formulation for use as a hard surface cleaner, comprising alkyl sulphates, alkyl ether sulphates, a betaine surfactant, an ethoxylated alcohol, and a C₈₋₂₂ alkyl polyglycoside, which formulation may also comprise an amine oxide.

US 6 015 780 generally discloses a surfactant composition containing a) a C₁₂ betaine, b) a C₄-C₂₂ alkyl and/or alkeneyl oligoglycoside, preferably an oligoglucoside, and c) a fatty alcohol (ether) sulphate, and optionally d) a fatty alcohol ethoxylate and/or e) an amine oxide.

US 2006/0009369 generally discloses a cleaning composition for hard surfaces that may comprise e.g. an ethoxylated alcohol, an amine oxide and/or an alkyl polyglycoside, where C₉C₁₁ alkyl polyglucoside is used as a specific example.

US 2009/0188533 is specifically directed towards formulations for removal of different types of traffic films. The formulations disclosed comprise a) at least one anionic surfactant, b) at least one polyoxyalkylene ammonium cationic surfactant having three C₁-C₄ alkyl groups and one polyoxyalkylene chain, and c) an alkaline agent. Optional additional ingredients may comprise at least one polycarboxylic acid chelating agent, at least one non-ionic or amphoteric surfactant, at least one hydrotrope, inorganic and/or organic acids, and at least one silicate.

So far it appears that the use of certain cationic co-surfactants in combination with non-ionic surfactants has proved to be the best way of reducing the traffic film remaining on the surface when a brushless cleaning method is applied, but still there is room for improvement to minimize this problem, since consumers are asking for better cleaning.

### Summary of the Invention

It is an object of the present invention to at least partially meet the above-mentioned need in the art and to provide a formulation that exhibits high efficacy in removing dirt from hard surfaces, in particular for brushless cleaning of vehicles.

It is another object of the present invention to provide a formulation comprising compounds that have advantageous environmental properties.

Now it has been found that an alkaline aqueous composition comprising
a) an amine oxide,
b) a nonionic surfactant, not being an amine oxide, and
c) a cationic hydrotrope having the formula (I) 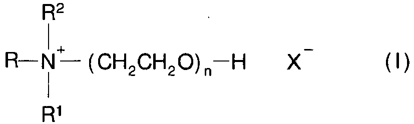 where R = C₆ - C₂₂ hydrocarbyl, R¹ and R² are independently C₁ - C₄ alkyl, n is at least 12, and at most 25, and X⁻ is an anion, e.g. halide or methylsulphate; with the proviso that if any anionic and/or amphoteric surfactant is present in the composition, then the molar amount of cationic hydrotrope of formula (I) is greater than the molar amount of any anionic groups that are part of an anionic and/or amphoteric surfactant is very efficient for removal of dirt from hard surfaces and in particular significantly reduces the amount of traffic film remaining on the surface after brushless vehicle cleaning as compared to presently applied formulation concepts.

Thus, in a first aspect, the present invention relates to the use of the aforementioned formulation for the cleaning of hard surfaces, especially for brushless vehicle cleaning In a second aspect, the present invention relates to the aforementioned formulation, as such wherein the weight ratio of the sum of amine oxide and nonionic surfactant to hydrotrope is between 1:3 and 5:3.

The fact that the composition works very well for brushless cleaning should not be interpreted in such a way that it would be limited to such use, since it is very efficient for all kinds of hard surface cleaning.

These and other aspects of the present invention will be apparent from the following detailed description of the invention.

### Detailed Description of the Invention

The present invention relates to the use of an alkaline aqueous composition comprising
a) an amine oxide,
b) a nonionic surfactant, not being an amine oxide,
c) a cationic hydrotrope having the formula (I) 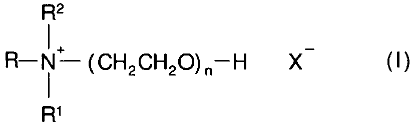 where R = C₆ - C₂₂ hydrocarbyl, preferably C₆ - C₂₂ alkyl or alkenyl, more preferably C₈ - C₂₀ alkyl or alkenyl, and most preferably C₁₀ - C₁₈ alkyl or alkenyl; R¹ and R² are independently C₁ - C₄ alkyl, preferably methyl or ethyl, and most preferably both R¹ and R² are methyl; n is at least 12, and at most 25, preferably at most 20 and most preferably at most 17; and X⁻ is an anion, e.g. halide or methylsulphate,
d) optionally other conventional additives, and
e) balance water;
for the cleansing of hard surfaces, especially for reducing the amount of traffic film left on the surface after brushless vehicle cleaning.

It is noted that optional additives d) can comprise further surfactants. If any anionic and/or amphoteric surfactant is present in the composition, then the molar amount of cationic hydrotrope of formula (I) is greater than the molar amount of any anionic groups that are part of an anionic and/or amphoteric surfactant. However, preferably no anionic surfactant is present in the composition. In another embodiment no anionic or amphoteric surfactant is present.

Another aspect of the present invention is the alkaline aqueous composition described above per se, wherein the weight ratio of the sum of amine oxide and nonionic surfactant to hydrotrope is between 1:3 and 5:3.

The term "anionic groups" means anionic groups that are covalently bound within the anionic or the amphoteric surfactant. For example, a sulphate group of an alkyl sulphate having the formula R-OSO₃⁻ A⁺, where R is an hydrocarbyl group with at least 6 carbon atoms, is covalently bound to the hydrocarbyl group R, and these groups together constitute the anionic surfactant. Counterions, such as X⁻ in formula I, e.g. CH₃OSO₃⁻, are not to be taken into account in this context. Further, amine oxides are not to be considered as amphoteric surfactants in this context. If any anionic and/or amphoteric surfactant is present in the composition, the molar ratio of anionic groups of the surfactant to cationic surfactant of formula (I) is less than 1:1, preferably less than 1:2, and more preferably less than 1:3. Most preferably, the aqueous composition is free of anionic and amphoteric surfactants. The reason for this is to avoid complexation between the cationic hydrotrope having formula (I) and anionic surfactants, which complexation is not desirable since it would interfere with the solubilisation of the nonionic surfactant by the cationic hydrotrope.

Nonionic surfactants are known to be good wetting agents, and are often present in compositions for the cleaning of hard surfaces. Most often hard surface cleaning compositions contain alkaline components. Many nonionic surfactants are not soluble enough in aqueous solutions, especially those with a high amount of electrolytes present, such as alkali hydroxides, alkaline builders and/or complexing agents, and therefore need the presence of a hydrotrope to improve their solubility. A good hydrotrope is not necessarily a good wetting agent. Its main task is to enhance the solubility of the nonionic surfactant and so increase the wetting ability of the composition, because the otherwise insoluble nonionic surfactant now is dissolved and can exert its wetting ability. A number of hydrotropes for nonionic surfactants have been described in various publications. Examples of such hydrotropes are ethanol, sodium xylene sulphonate, sodium cumene sulphonate, alkyl glycosides, and alkoxylated quaternary ammonium compounds.

An alkaline composition is herein defined as a composition having a pH > 7, which pH is obtained by the addition of an alkaline agent, such as alkali hydroxides, alkaline builders and/or alkaline complexing agents. In one embodiment the pH is above 7.1 and in another embodiment it is above 7.5. In the context of the present invention pH is given as the value obtained when measured for the composition at 25°C. The alkali hydroxides are preferably sodium or potassium hydroxide. The alkaline builders could be an alkali carbonate or an alkali hydrogen carbonate, such as sodium carbonate, potassium carbonate, sodium hydrogen carbonate or potassium hydrogen carbonate, an alkali salt of a silicate, such as sodium silicate or sodium metasilicate, or alkali salts of phosphates, such as sodium orthophosphate. Alkaline builders which act through complexation are e.g. sodium pyrophosphate and sodium tripolyphosphate and the corresponding potassium salts. Examples of organic builders/complexing agents are aminocarboxylates, such as sodium nitrilotriacetate (Na₃NTA), sodium ethylenediaminetetraacetate (EDTA), sodium diethylenetriaminepentaacetate, sodium 1,3-propylenediaminetetraacetate, and sodium hydroxyethylethylenediaminetriacetate; aminopolyphosphonates, such as nitrilotrimethylenephosphonate; organic phosphates; polycarboxylates, such as citrates; polymeric carboxylates, and alkali salts of gluconic acid, such as sodium or potassium gluconates.

The amine oxide component preferably has the formula 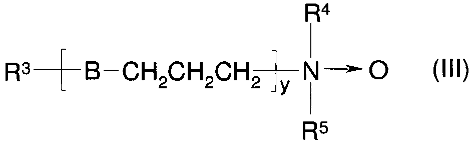 where R³ is a hydrocarbyl or acyl group containing 8-22 carbon atoms, B is O or NH and y is 0 or 1, provided that when R³ is an acyl group, y must be 1; R⁴ and R⁵ are independently a C₁-C₄ alkyl group or the group (AO)_{z}H, where AO is an alkyleneoxy group having 2-4 carbon atoms and z is a number from 1 to 5.

It is noted that amine oxides are sometimes classified as nonionic surfactants, sometimes as amphoteric surfactants, sometimes as zwitterionic surfactants, sometimes as cationic surfactants, and sometimes mentioned as a specific group of surfactants. To avoid confusion, amine oxides are herein treated as a specific group of surfactants and not considered to generally belong to the group of nonionic surfactants, amphoteric surfactants, cationic surfactants or any other general group of surfactants.

The nonionic surfactant component is preferably an alkylene oxide adduct, suitably an alcohol alkylene oxide adduct, that preferably has the formula

R⁶O - (PO)ₐ(EO)_{b}(PO)_{c}H (IV)

where R⁶ is a C₈ to C₁₈ alkyl group, preferably C₈ to C₁₂, PO is a propyleneoxy unit, EO is an ethyleneoxy unit, a=0-5, preferably 0-4, and most preferably 0-2; b=1-20, preferably 1-12, more preferably 2-8 and most preferably 2-5; and c=0-5, preferably 0-4, more preferably 0-2, and most preferably 0. Thus, the C₈-C₁₈-alcohol alkoxylates may, in addition to the 1-20 ethyleneoxy units, also contain up to 5 propyleneoxy units. The number of propyleneoxy units, when present, may be as small as 0.1 mole PO per mole alcohol. The ethyleneoxy units and the propyleneoxy units may be added randomly or in blocks. The blocks may be added to the alcohol in any order. The alkoxylates may also contain an alkyl group with 1-4 carbon atoms in the end position. Preferably, the alkoxylates contains 2-8 ethyleneoxy units and 0-2 propyleneoxy units. The alkyl group of the nonionic surfactants may be linear or branched, saturated or unsaturated. Suitable linear nonionic surfactants are C₉-C₁₁ alcohol + 4, 5 or 6 moles of EO, C₁₁ alcohol + 3, 4, 5, 6, 7 or 8 moles of EO, tridecyl alcohol + 4, 5, 6, 7 or 8 moles of EO, and C₁₀-C₁₄ alcohol + 8 moles of EO + 2 moles of PO. Suitable branched nonionic surfactants are 2-ethylhexanol + 3, 4 or 5 moles of EO, 2-ethylhexanol + 2 moles of PO + 4, 5 or 6 moles of EO, 2-propylheptanol + 3, 4, 5 or 6 moles of EO, and 2-propylheptanol + 1 mole of PO + 4 moles of EO. Another example is 2-butyloctanol + 5, 6 or 7 moles of EO. Wherever the degree of alkoxylation is discussed, the numbers referred to are molar average numbers.

The composition to be used in the present invention may be a concentrate or a ready-to-use solution and preferably comprises
i) 0.03-20% by weight of the amine oxide,
ii) 0.03-20% by weight of the nonionic surfactant,
iii) 0.015-20% by weight of the hydrotrope,
iv) 0.03-40% by weight of alkali hydroxides, alkaline builders and/or alkaline complexing agents,
v) optionally other conventional additives, and
vi) balance water.

The lower part of the range pertains to diluted ready-to-use solutions and the higher part to concentrated solutions. The concentrated solutions offer the advantage of reduced transportation costs and ease of dilution and handling. A typical concentrate can be diluted 80 to 200 times to form the ready-to-use solutions. It is noted that such dilution can be performed in one or more steps, for example a concentrate can be diluted 50 times, then provided to the end user, and further diluted 4 times to get a ready-to-use solution. In a supply chain this can be the most effective way of getting an accurate degree of dilution, while minimizing transport costs.

The weight ratio of amine oxide to nonionic surfactant is normally between 1:2 and 8:3, and the weight ratio of the sum of amine oxide and nonionic surfactant to hydrotrope is normally between 1:3 and 5:3.

The concentrated compositions of the present invention are clear, or slightly hazy, and stable. The clarity interval is suitably between 0-30°C, preferably between 0-40 °C, more preferably between 0-50 °C, and most preferably between 0-60°C or higher. This could be adapted by changing the relative amounts of hydrotrope, amine oxide and nonionic surfactant. The concentrate normally contains at least 50% by weight of water, suitably at least 70% by weight, and normally at most 95% by weight of water, suitably at most 90% by weight.

Another embodiment of the invention relates to intermediates that are useful for making the formulations of the invention. More specifically, due to transportation requirements a concentrate may be made without the alkaline components, and such concentrates may be free of water, or contain up to 50% water. Accordingly the invention also relates to intermediates comprising
0.5-50%w/w of one or more amine oxides,
0.5-50%w/w of one or more nonionic surfactants,
0.5-50%w/w of one or more cationic hydrotropes having the formula (I) 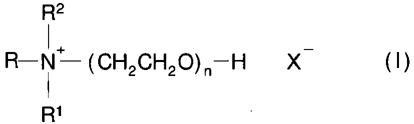 where R = C₆ - C₂₂ hydrocarbyl, R¹ and R² are independently C₁ - C₄ alkyl, n is at least 12, and at most 25; and X⁻ is an anion,
optionally other conventional additives, and
0.0-50%w/w of water,
up to a total of 100% by weight, whereby the pH of the intermediate is below 8. In one embodiment the pH of the intermediate is below 7.5. In another embodiment the pH is above 7.0, preferably above 7.1. Such intermediates can be diluted with water and, if needed, combined with an alkaline agent as described above, to form a formulation of the present invention.

All embodiments of the invention may further contain other hydrotropes and surfactants, and conventional additives, such as thickening agents, solvents, colourants, soil antiredeposition agents, preservatives, corrosion inhibitors, and foam regulators.

### General Experimental

To evaluate the cleaning efficiency of different formulations at different dilutions, the following procedure was used:

### High pressure cleaning test

Whiteboard 5.5x9 cm plates are treated with Turtle wax® wax Extra with PTFE (polytetrafluoroethylene), polished with a soft cloth, and then an oil-soot mixture obtained from train diesel engines is applied on the plates. This is a very tough type of soil to remove, and it is used to simulate a worst case of traffic film. The reflectance of each plate is measured with a Minolta Chroma Meter CR-200 reflectometer first after waxing and then after soiling. The plates are then magnetically fixed to a larger board. A container filled with the cleaning liquid is connected through a tube to a pump that is further connected by a tube to a flat-fan spray nozzle mounted on a stand that is moveable both vertically and horizontally, manoeuvred by a cable and an electric motor and by application of compressed air. The cleaning liquid is applied on the plates by pumping it through the flat-fan spray nozzle at a pressure of 4 bar with a liquid flow rate of about 2 I/min, while the nozzle is moved horizontally in front of the plates. For the rinsing step a set of three cone jet nozzles connected to a tap water pipe via a high pressure pump is used. These nozzles are also mounted on the above-mentioned stand. One minute after the application of the cleaning liquid the plates are rinsed by pumping tap water through the set of nozzles at a pressure of 80 bar with a liquid flow of about 4.5 I/min, using a plunger pump of Type P21/23-130 from Speck-Kolbenpumpenfabrik in Austria, while the nozzles are moved horizontally in front of the plates while at the same time swinging up and down. Between the cleaning tests the tube is carefully flushed by pumping tap water through it to remove any remaining cleaning liquid from the previous test. After the rinse the reflectance of each plate is once again measured with the reflectometer. The cleaning ability is presented either as the % soil removal (comparison between the cleaned plates and the soiled plates) or as the loss of lightness (comparison between the cleaned plates and the waxed, unsoiled plates). For a good cleaning composition the loss of lightness values obtained should thus be as low as possible.

Note that the values given are to be used only as relative, not absolute values.

The values to be compared should be obtained with the same batch of oil-soot mixture being used. For each test run with a specific composition 3 plates are used, and the test is performed at least twice. Where nothing else is stated, the values are thus the average results of tests performed on at least six plates. The range wherein the results were found is given for each test.

All solutions and the water were kept at a temperature of 15 - 20°C. In all following examples all percentages are by weight, unless otherwise specified.

### Example 1

Compositions with the reagents specified in Table 1 were made. The hydrotrope was added in such an amount that the solution exhibited the clarity interval stated. The test solutions were diluted to 1:40 and 1:80. The cleaning ability of the diluted test solutions was evaluated by the high pressure cleaning test described above, and the results are collected in Table 2.

**Table 1**

| Ingredient | Composition 1¹ | Composition A¹ | Composition B¹ |
|---|---|---|---|
| C₉-C₁₁-alcohol + 4EO² | 3 | 3 | 3 |
| (C12-C14 alkyl)methylamine+15EO, methyl chloride quaternised³ | 1.5 | | |
| n-hexyl polyglucoside⁴ | | 1.88 | |
| SCS (sodium cumene sulphonate)⁵ | | | 1.8 |
| Tetradecyldi methylamine oxide⁷ | 2.5 | 2.5 | 2.5 |
| IDS⁸ | 4.08 | 4.08 | 4.08 |
| NaOH⁹ | 1 | 1 | 1 |
| Water | balance | balance | balance |
| Clarity interval (°C) | 0-55 | 0-34 | 0-44 |

| | | | |
|---|---|---|---|
| ¹All amounts are given as % by weight, and refer to the active amount of the respective component in the composition. ²Berol® OX-91-4; ³Berol® R648; ⁴AG 6206; ⁵ex Stephan; ⁷Aromox® 14D-W970; ⁸iminodisuccinate ex Bayer; ⁹ex Merck | | | |

**Table 2**

| Composition | Removed soil (%) at dilution 1:40 | Removed soil (%) at dilution 1:80 |
|---|---|---|
| 1 | 90 ± 5 | 53 ± 11 |
| A (Comparison) | 88 ± 7 | 10 ± 3 |
| B (Comparison) | 83 ± 7 | 8 ± 2 |

### Examples 2-3

Compositions with the reagents specified in Table 3 were made. The hydrotrope was added in such an amount that the solution exhibited the clarity interval stated. The test solutions were diluted to 1:20 with water. The cleaning ability of the diluted test solutions was evaluated by the cleaning test described below, and the results are collected in Table 4.

### Cleaning test:

White-painted plates were smeared with an oil-soot mixture obtained from train diesel engines. 25 ml of the test solutions, in this case formulations 2, C, and 3 in Table 3 diluted to 1:20, were poured onto the top of the oil-smeared plates and left there for one minute. The plates were then rinsed with a rich flow of water. All solutions and the water were kept at a temperature of about 15 - 20°C. All test solutions were placed on the same plate, and the result is presented as a ranking of the compounds, where 1 is judged by ocular inspection as the best result. The results are collected in Table 4.

**Table 3**

| Ingredient | Composition 2 | Composition C | Composition 3 |
|---|---|---|---|
| C₉-C₁₁-alcohol+6EO | 3 | 3 | 3 |
| (C12-C14 alkyl)methyl-amine+15EO, methyl chloride quaternized | 1.2 | 1.2 | 1.2 |
| Tetradecyldimethyl-amine oxide | 1.25 | - | 2.5 |
| IDS | 4.08 | 4.08 | 4.08 |
| NaOH | 1 | 1 | 1 |
| Water | balance | balance | balance |
| Clarity interval (°C) | 0->60 | 0->60 | 0->60 |

**Table 4**

| Composition | Ranking order |
|---|---|
| 2 | 2 |
| C (Comparison) | 3 |
| 3 | 1 |

The comparative composition without amine oxide has the lowest ranking.

### Example 4

In this example a less soluble non-ionic surfactant was used than in Examples 2-3. Compositions with the reagents specified in Table 5 were made. The hydrotrope was added in such an amount that the solution exhibited the clarity interval stated. The test solutions were diluted to 1:20. The cleaning ability of the diluted test solutions was evaluated by the high pressure cleaning test as described under General Experimental. The loss of lightness values obtained from the high pressure cleaning test are displayed in Table 6.

**Table 5**

| Ingredient | Composition 4 | Composition D |
|---|---|---|
| C₉-C₁₁-alcohol+4EO | 3 | 3 |
| (C12-C14 alkyl)methylamine+15EO, methyl chloride quaternized | 1.2 | 1.2 |
| Tetradecyldimethyl-amine oxide | 2.5 | - |
| IDS | 4.08 | 4.08 |
| NaOH | 1 | 1 |
| Water | balance | balance |
| Clarity interval (°C) | 0-42 | Hazy at RT |

**Table 6**

| Composition | High pressure cleaning test (Loss of lightness values) |
|---|---|
| 4 | 0.2±0.2 |
| D (Comparison) | 0.6±0.2 |

It is clearly shown that the addition of an amine oxide to a cleaning composition results in a composition having a better cleaning performance (lower loss of lightness). Further, the composition with the amine oxide added has a broader clarity interval.

### Example 5

In this example the effect of the removal of the nonionic surfactant or the nonionic surfactant + hydrotrope from the composition is demonstrated. Compositions with the reagents specified in Table 7 were made. The total active content of surfactants in each formulation is 6.7% (w/w). Composition 5 is according to the invention, in composition E the nonionic surfactant is lacking, and in composition F both the nonionic surfactant and the hydrotrope are lacking.

The test solutions were diluted to 1:60. The cleaning ability of the diluted test solutions was evaluated by the high pressure cleaning test as described under General Experimental. The % removed soil values obtained from the high pressure cleaning test are displayed in Table 8.

**Table 7**

| Ingredient | Composition 5 | Composition E (Comparison) | Composition F (Comparison) |
|---|---|---|---|
| C₉-C₁₁-alcohol+4EO | 3 | - | - |
| (C12-C14 alkyl)methylamine+15EO, methyl chloride quaternized | 1.2 | 1.2 | - |
| Tetradecyldimethyl-amine oxide | 2.5 | 5.5 | 6.7 |
| IDS | 4.08 | 4.08 | 4.08 |
| NaOH | 1 | 1 | 1 |
| Water | balance | balance | balance |

**Table 8**

| Composition | Removed soil (%) at dilution 1:60 |
|---|---|
| 5 | 61 |
| E (Comparison) | 44 |
| F (Comparison) | 31 |

From the examples above it is thus clear that the components a), b), and c) in the composition of the invention all make a positive contribution to the good cleaning effect, and also that the effect is synergistic, since it is not possible to compensate by adding more of one component if another one is absent from the composition.

## Claims

1. Use of an alkaline aqueous composition comprising
a) an amine oxide,
b) a nonionic surfactant, not being an amine oxide,
c) a cationic hydrotrope having the formula (I) 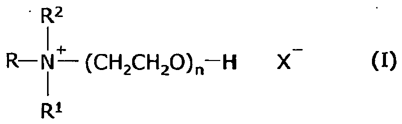 where R = C₆ - C₂₂ hydrocarbyl, R¹ and R² are independently C₁ - C₄ alkyl, n is at least 12, and at most 25; and X⁻ is an anion,
d) optionally other conventional additives, and
e) balance water;
with the proviso that if any anionic and/or amphoteric surfactant is present in the composition, then the molar amount of cationic hydrotrope of formula (I) is greater than the molar amount of any anionic groups that are part of an anionic and/or amphoteric surfactant; for cleaning of hard surfaces.

2. Use according to claim 1 where the composition comprises an anionic and/or an amphoteric surfactant, wherein the molar ratio of anionic groups in the anionic and/or the amphoteric surfactant to cationic hydrotrope is less than 1:3.

3. Use according to claim 1 where the composition is free of anionic and amphoteric surfactants.

4. Use according to claim 1 where the composition comprises alkali hydroxides, alkaline builders and/or alkaline complexing agents.

5. Use according to claims 1-4 where the amine oxide has the formula 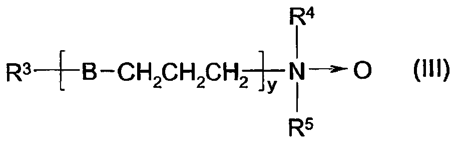 where R³ is a hydrocarbyl or acyl group containing 8-22 carbon atoms, B is O or NH and y is 0 or 1, provided that when R³ is an acyl group, y must be 1; R⁴ and R⁵ are, independently, a C₁-C₄ alkyl group or the group (AO)_{z}H, where AO is an alkyleneoxy group having 2-4 carbon atoms and z is a number from 1 to 5.

6. Use according to claims 1-5 where the nonionic surfactant has the formula
R⁶O - (PO)ₐ(EO)_{b}(PO)_{c}H (IV)
where R⁶ is a C₈ to C₁₈ hydrocarbyl group, PO is a propyleneoxy unit, EO is an ethyleneoxy unit, a=0-5, b=1-20, and c=0-5.

7. Use according to claims 1-6 where the composition comprises
i) 0.03-20% by weight of the amine oxide,
ii) 0.03-20% by weight of the nonionic surfactant,
iii) 0.015-20% by weight of the hydrotrope,
iv) 0.03-40% by weight of alkali hydroxides, alkaline builders and/or alkaline, complexing agents,
v) optionally other conventional additives, and
vi) balance water.

8. Use according to claims 1-7 where the weight ratio of amine oxide to nonionic surfactant is between 1:2 and 8:3.

9. Use according to claims 1-8 where the weight ratio of the sum of amine oxide and nonionic surfactant to hydrotrope is between 1:3 and 5:3.

10. Use according to claim 1-9 for brushless vehicle cleaning, preferably with a water jet spray apparatus.

11. A method for cleaning hard surfaces which comprises the steps of adding to said surfaces a cleaning effective amount of the composition defined in claims 1-9 and rinsing the said surfaces by using a water jet spray apparatus.

12. An alkaline aqueous composition comprising
a) an amine oxide,
b) a nonionic surfactant, not being an amine oxide,
c) a cationic hydrotrope having the formula (I) 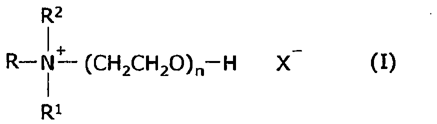 where R = C₆ - C₂₂ hydrocarbyl, R¹ and R² are independently C₁ - C₄ alkyl, n is at least 12, and at most 25; and X⁻ is an anion,
d) optionally other conventional additives, and
e) balance water;
where the weight ratio of the sum of amine oxide and nonionic surfactant to hydrotrope is between 1:3 and 5:3; and
with the proviso that if any anionic and/or amphoteric surfactant is present in the composition, then the molar amount of cationic hydrotrope of formula (I) is greater than the molar amount of any anionic groups that are part of an anionic and/or amphoteric surfactant.

13. A composition according to claim 12 comprising
i) 0.03-20% by weight of the amine oxide,
ii) 0.03-20% by weight of the nonionic surfactant,
iii) 0.015-20% by weight of the hydrotrope,
iv) 0.03-40% by weight of alkali hydroxides, alkaline builders and/or alkaline, complexing agents,
v) optionally other conventional additives, and
vi) balance water.

14. An intermediate comprising
0.5-50%w/w of one or more amine oxides,
0.5-50%w/w of one or more nonionic surfactants,
0.5-50%w/w of one or more cationic hydrotropes having the formula (I) 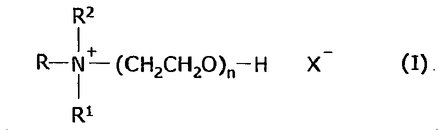 where R = C₆- C₂₂ hydrocarbyl, R¹ and R² are independently C₁ - C₄ alkyl, n is at least 12, and at most 25; and X⁻ is an anion,
optionally other conventional additives, and
0.0-50%w/w of water,
up to a total of 100% by weight, whereby the pH of the intermediate is below 8 as measured at 25°C, which can be diluted and combined with an alkaline agent to form a formulation of claims 12-13.

15. The process of forming the composition of claims 12-13, comprising the steps of dilution of an intermediate of claim 14 with water, and if needed, combination with an alkaline agent.

## Patentansprüche

1. Verwendung einer wässrigen alkalischen Zusammensetzung umfassend
a) einem Aminoxid,
b) einem nichtionischen Tensid, das kein Aminoxid ist,
c) einem kationischen Hydrotrop mit der Formel (I) 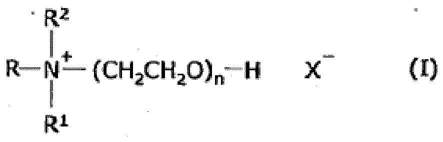 wobei R = C₆ - C₂₂ Kohlenwasserstoffrest (Hydrocarbyl), R¹ und R² unabhängig C₁ - C₄ Alkyl sind, n mindestens 12 und höchstens 25 ist, und X⁻ ein Anion ist,
d) wahlweise weiteren herkömmlichen Additiven, und
e) Wasser,
mit der Maßgabe, dass, wenn ein anionisches und/oder amphoteres Tensid in der Zusammensetzung vorhanden ist, die Stoffmenge (*molar amount*) des kationischen Hydrotrops der Formel (I) größer ist als die Stoffmenge anionischer Gruppen, die Teil eines anionischen und/oder amphoteren Tensids sind, zum Reinigen harter Oberflächen.

2. Verwendung nach Anspruch 1, wobei die Zusammensetzung ein anionisches und/oder ein amphoteres Tensid aufweist, wobei das Molverhältnis anionischer Gruppen in dem anionischen und/oder amphoteren Tensid zu dem kationischen Hydrotrop weniger als 1:3 ist.

3. Verwendung nach Anspruch 1, wobei die Zusammensetzung frei von anionischen und amphoteren Tensiden ist.

4. Verwendung nach Anspruch 1, wobei die Zusammensetzung Alkalihydroxide, alkalische Bildner und/oder alkalische Komplexbildner aufweist.

5. Verwendung nach Anspruch 1-4, wobei das Aminoxid die folgende Formel hat: 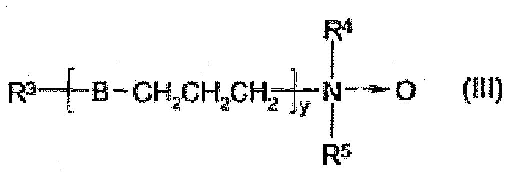 wobei R³ ein Kohlenwasserstoffrest (Hydrocarbyl) oder eine Acylgruppe mit 8-22 Kohlenstoffatomen ist, B gleich O oder NH und y o oder 1 ist, vorausgesetzt, dass, wenn R³ eine Acylgruppe ist, y 1 sein muss; R⁴ und R⁵ sind unabhängig eine C₁-C₄ Alkylgruppe oder die Gruppe (AO)_{z}H, wobei AO eine Alkylenoxy-Gruppe mit 2-4 Kohlenstoffatomen und z eine Zahl von 1 bis 5 ist.

6. Verwendung nach Anspruch 1-5, wobei das nichtionische Tensid die Formel
R⁶O - (PO)ₐ(EO)_{b}(PO)_{c}H (IV)
hat
wobei R⁶ eine C₈ bis C₁₈ Kohlenwasserstoffrest-Gruppe (Hydrocarbyl-Gruppe), PO eine Propylenoxy-Einheit, EO eine Ethylenoxy-Einheit, a=o, b=1-20 und c=0-5 ist.

7. Verwendung nach Anspruch 1-6, wobei die Zusammensetzung folgendes aufweist:
i) 0,03-20 Gew.-% des Aminoxids,
ii) 0,03-20 Gew.-% des nichtionischen Tensids,
iii) 0,015-20 Gew.-% des Hydrotrops
iv) 0,03-40 Gew.-% Alkalihydroxide, alkalische Bildner und/oder alkalische Komplexbildner,
v) wahlweise weitere herkömmliche Additive und
vi) Wasser.

8. Verwendung nach Anspruch 1-7, wobei das Gewichtsverhältnis von Aminoxid zu dem nichtionischen Tensid zwischen 1:2 und 8:3 beträgt.

9. Verwendung nach Anspruch 1-8, wobei das Gewichtsverhältnis der Summe von Aminoxid und nichtionischem Tensid zu Hydrotrop zwischen 1:3 und 5:3 beträgt.

10. Verwendung nach Anspruch 1-9 für bürstenlose Fahrzeugreinigung, vorzugsweise mit einer Vorrichtung mit Wassersprühstrahl.

11. Verfahren zur Reinigung harter Oberflächen, das die Schritte des Zufügens einer wirksamen Reinigungsmenge zu den genannten Oberflächen der in den Ansprüchen 1-9 definierten Zusammensetzung und das Abspülen der genannten Oberflächen mittels einer Vorrichtung mit Wassersprühstrahl aufweist.

12. Wässrige alkalische Zusammensetzung umfassend
a) einem Aminoxid,
b) einem nichtionischen Tensid, das kein Aminoxid ist,
c) einem kationischen Hydrotrop mit der Formel (I) 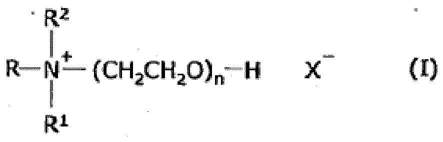 wobei R = C₆ - C₂₂ Kohlenwasserstoffrest (Hydrocarbyl), R¹ und R² unabhängig C₁ - C₄ Alkyl sind, n mindestens 12 und höchstens 25 ist, und X⁻ ein Anion ist,
d) wahlweise weiteren herkömmlichen Additiven, und
e) Wasser,
wobei das Gewichtsverhältnis der Summe von Aminoxid und nichtionischem Tensid zu Hydrotrop zwischen 1:3 und 5:3 beträgt, und
mit der Maßgabe, dass, wenn ein anionisches und/oder amphoteres Tensid in der Zusammensetzung vorhanden ist, die Stoffmenge (*molar amount*) des kationischen Hydrotrops der Formel (I) größer ist als die Stoffmenge anionischer Gruppen, die Teil eines anionischen und/oder amphoteren Tensids sind.

13. Zusammensetzung nach Anspruch 12 mit
i) 0,03-20 Gew.-% des Aminoxids,
ii) 0,03-20 Gew.-% des nichtionischen Tensids,
iii) 0,015-20 Gew.-% des Hydrotrops
iv) 0,03-40 Gew.-% Alkalihydroxide, alkalische Bildner und/oder alkalische Komplexbildner,
v) wahlweise weitere herkömmliche Additive und
vi) Wasser.

14. Zwischenprodukt mit
0,5-50%w/w von einem oder mehreren Aminoxiden, 0,5-50%w/w von einem oder mehreren nichtionischen Tensiden, 0,5-50%w/w von einem oder mehreren kationischen Hydrotropen mit der Formel (I) 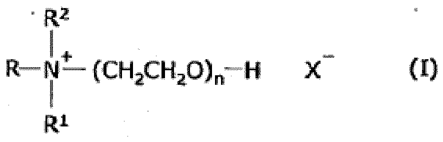 wobei R = C₆ - C₂₂ Kohlenwasserstoffrest (Hydrocarbyl), R¹ und R² unabhängig C₁ - C₄ Alkyl sind, n mindestens 12 und höchstens 25 ist, und X⁻ ein Anion ist,
wahlweise weiteren herkömmlichen Additiven, und
0,0-50%w/w Wasser,
bis zu einer Gesamtmenge von 100 Gew.-%, wobei der pH-Wert des Zwischenproduktes unter 8 liegt, gemessen bei 25°C, das mit einem alkalischen Mittel verdünnt und kombiniert werden kann, um eine Formulierung nach Anspruch 12-13 zu bilden.

15. Verfahren zur Herstellung der Zusammensetzung nach Anspruch 12-13, das die Schritte des Verdünnens eines Zwischenproduktes nach Anspruch 14 mit Wasser und bei Bedarf die Kombination mit einem alkalischen Mittel aufweist.

## Revendications

1. Utilisation d'une composition aqueuse alcaline comprenant
a) un oxyde d'amine,
b) un agent tensioactif non ionique, qui n'est pas un oxyde d'amine,
c) un hydrotrope cationique ayant la formule (I) 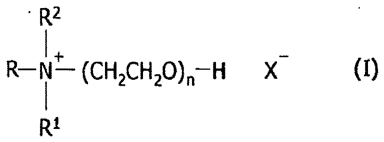 dans laquelle R = un groupe hydrocarbyle en C₆ à C₂₂, R¹ et R² représentent indépendamment des groupes alkyle en C₁ à C₄, n est au moins égal à 12, et au plus égal à 25 ; et X⁻ représente un anion,
d) éventuellement d'autres additifs conventionnels, et
e) le reste étant de l'eau ;
avec la condition que ; si un agent tensioactif anionique et/ou amphotère est présent dans la composition, alors la quantité molaire d'hydrotrope cationique de formule (I) est supérieure à la quantité molaire de tous les groupes anioniques qui font partie d'un agent tensioactif anionique et/ou amphotère ; pour le nettoyage des surfaces dures.

2. Utilisation selon la revendication 1, dans laquelle la composition comprend un agent tensioactif anionique et/ou amphotère, où le rapport molaire de groupes anioniques dans l'agent tensioactif anionique et/ou amphotère sur hydrotrope cationique est inférieur à 1:3.

3. Utilisation selon la revendication 1, dans laquelle la composition est exempte d'agents tensioactifs anioniques et amphotères.

4. Utilisation selon la revendication 1, dans laquelle la composition comprend des hydroxydes alcalins, des adjuvants alcalins et/ou des agents complexants alcalins.

5. Utilisation selon les revendications 1 à 4, dans laquelle l'oxyde d'amine répond à la formule 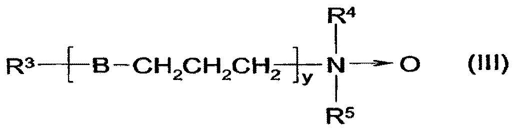 dans laquelle R³ représente un groupe hydrocarbyle ou un groupe acyle contenant de 8 à 22 atomes de carbone, B représente O ou NH et y est 0 ou 1, à condition que lorsque R³ est un groupe acyle, y doit être égal à 1 ; R⁴ et R⁵ représentent, indépendamment, un groupe alkyle en C₁ à C₄ ou le groupe (AO)₂H, où AO représente un groupe alkylèneoxy ayant 2 à 4 atomes de carbone et z est un nombre de 1 à 5.

6. Utilisation selon les revendications 1 à 5, dans laquelle l'agent tensioactif non ionique répond à la formule
R⁶O - (PO)ₐ(EO)_{b}(PO)_{c}H (IV)
dans laquelle R⁶ représente un groupe hydrocarbyle en C₈ à C₁₈, PO est une unité propylèneoxy, EO est une unité éthylèneoxy, a= 0 à 5, b= 1 à 20, et c= 0 à 5.

7. Utilisation selon les revendications 1 à 6, dans laquelle la composition comprend
i) de 0,03 à 20% en poids de l'oxyde d'amine,
ii) de 0,03 à 20% en poids de l'agent tensioactif non ionique,
iii) de 0,015 à 20% en poids de l'hydrotrope,
iv) de 0,03 à 40% en poids d'hydroxydes alcalins, d'adjuvants alcalins et/ou d'agents complexants alcalins,
c) éventuellement d'autres additifs conventionnels, et
vi) le reste étant de l'eau.

8. Utilisation selon les revendications 1 à 7, dans laquelle le rapport pondéral d'oxyde d'amine sur agent tensioactif non ionique est compris entre 1:2 et 8:3.

9. Utilisation selon les revendications 1 à 8, dans laquelle le rapport pondéral de la somme d'oxyde d'amine et d'agent tensioactif non ionique sur hydrotrope est compris entre 1:3 et 5:3.

10. Utilisation selon la revendication 1 à 9 pour le nettoyage par dispositif sans brossage, de préférence avec un appareil de pulvérisation à jet d'eau.

11. Procédé pour le nettoyage des surfaces dures qui comprend les étapes consistant à ajouter auxdites surfaces une quantité efficace d'agent de nettoyage de la composition définie dans les revendications 1 à 9 et à rincer lesdites surfaces en utilisant un appareil de pulvérisation à jet d'eau.

12. Une composition aqueuse alcaline comprenant
a) un oxyde d'amine,
b) un agent tensioactif non ionique, qui n'est pas un oxyde d'amine,
c) un hydrotrope cationique de formule (I) 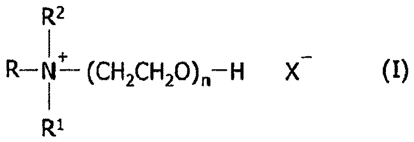 dans laquelle R = un groupe hydrocarbyle en C₆ à C₂₂, R¹ et R² représentent indépendamment un groupe alkyle en C₁ à C₄, n est au moins égal à 12, et au plus égal à 25 ; et X- représente un anion,
d) éventuellement d'autres additifs conventionnels, et
e) le reste étant de l'eau ;
dans laquelle le rapport pondéral de la somme d'oxyde d'amine et d'agent tensioactif non ionique sur hydrotrope est compris entre 1:3 et 5:3 ; et
avec la condition que si un agent tensioactif anionique et/ou amphotère est présent dans la composition, alors la quantité molaire d'hydrotrope cationique de formule (I) est supérieure à la quantité molaire de tous les groupes anioniques qui font partie d'un agent tensioactif anionique et/ou amphotère.

13. Une composition selon la revendication 12, comprenant
i) de 0,03 à 20% en poids de l'oxyde d'amine,
ii) de 0,03 à 20% en poids de l'agent tensioactif non ionique,
iii) de 0,015 à 20% en poids de l'hydrotrope,
iv) de 0,03 à 40% en poids d'hydroxydes alcalins, d'adjuvants alcalins et/ou d'agents complexants alcalins,
c) éventuellement d'autres additifs conventionnels, et
vi) le reste étant de l'eau.

14. Produit intermédiaire comprenant
de 0,5 à 50% en poids/poids d'un ou de plusieurs oxydes d'amine,
de 0,5 à 50% en poids/poids d'un ou de plusieurs agents tensioactifs non ioniques,
de 0,5 à 50% en poids/poids d'un ou de plusieurs hydrotropes cationiques ayant la formule (I) 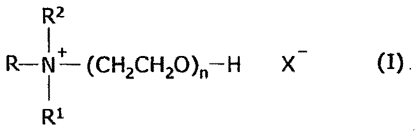 dans laquelle R = un groupe hydrocarbyle en C₆ à C₂₂, R¹ et R² représentent indépendamment un groupe alkyle en C₁ à C₄, n est au moins égal à 12, et au plus égal à 25 ; et X- représente un anion,
éventuellement d'autres additifs conventionnels, et
de 0,0 à 50% en poids/poids d'eau,
jusqu'à un total de 100% en poids, grâce à quoi le pH du produit intermédiaire est inférieur à 8 tel que mesuré à une température de 25°C, qui peut être dilué et combiné avec un agent alcalin pour former une formulation des revendications 12 à 13.

15. Procédé de formation de la composition des revendications 12 à 13, comprenant les étapes de dilution d'un produit intermédiaire de la revendication 14 avec de l'eau, et si nécessaire, la combinaison avec un agent alcalin.
